# EUROPÄISCHE PATENTSCHRIFT

(11) **EP 2 999 582 B1**
(45) Veröffentlichungstag und Bekanntmachung des Hinweises auf die Patenterteilung: **29.08.2018**
(21) Anmeldenummer: 14738719.5
(22) Anmeldetag: 21.05.2014
(51) Int. Cl.: B29C 51/34, B29L 31/00, B29C 51/32, B29C 51/44

(54) **WERKZEUG, WERKZEUGSTATION, THERMOFORMANLAGE UND VERFAHREN ZUM BETREIBEN EINER THERMOFORMANLAGE**
TOOL, TOOL STATION, THERMOFORMING SYSTEM AND METHOD FOR OPERATING A THERMOFORMING SYSTEM
OUTIL, STATION D'OUTILS, INSTALLATION DE THERMOFORMAGE ET PROCÉDÉ POUR FAIRE FONCTIONNER UNE INSTALLATION DE THERMOFORMAGE

(30) Priorität: 21.05.2013 DE 102013008457; 04.02.2014 DE 202014000907 U
(43) Veröffentlichungstag der Anmeldung: 30.03.2016
(73) Patentinhaber: Kiefel GmbH, 83395 Freilassing (DE)
(72) Erfinder: KNOLL, Peter, 83404 Ainring (DE); FEIL, Jürgen, 83410 Leobendorf (DE)
(74) Vertreter: Schieber, Christian
(86) Internationale Anmeldenummer: PCT/DE2014/000259
(87) Internationale Veröffentlichungsnummer: WO 2014/187446

(56) Entgegenhaltungen:
- WO-A1-98/05488
- DE-A1- 2 541 531
- DATABASE WPI Week 200982 Thomson Scientific, London, GB; AN 2009-R70435 XP002732630, -& CN 201 346 848 Y (KUNSHAN SANJIAN MOULD MACHINERY CO LTD) 18. November 2009 (2009-11-18)
- DATABASE WPI Week 200218 Thomson Scientific, London, GB; AN 2002-134600 XP002732631, -& JP 2001 301018 A (YAMADA KOSAKUSHO CO LTD) 30. Oktober 2001 (2001-10-30)

## Beschreibung

Die Erfindung betrifft ein Werkzeug und ein Verfahren zum Betreiben einer solchen Thermoformanlage.

Das Thermoformen ist in der täglichen Produktionspraxis weit verbreitet, siehe dazu WO9805488, JP2001301018, CN201346848Y, DE2541531 und DE4428257, wo CN201346848Y den Oberbegriff des Anspruchs 14 entspricht. Eine Kunststofflage, meist entweder als Rollenware in Folienform oder als vereinzelte Kunststoffplatten angeliefert, läuft in die Thermoformanlage ein, wird dort bis in einen gewünschten Temperaturbereich erhitzt und anschließend verformt. In derselben Station wie das Verformen kann ein Vereinzeln der hergestellten Nutzen erfolgen, oder das Vereinzeln erfolgt in einer späteren Station.

Beispielsweise werden auf diese Weise auch Türen oder Innenbehälter für Kühlschränke hergestellt. Sie werden aus Kunststoffplatten thermisch geformt. Dabei wird im Allgemeinen eine Kunststofffolie von der Rolle abgezogen, oder es werden Platten einer Transportvorrichtung zugeführt. In einer Station wird die Folie bis in den thermoplastischen Bereich erhitzt, und dann in der Formstation über ein Werkzeug in die gewünschte Form gebracht.

Der umlaufende Abfallstreifen, oft auch als Restgitter oder Foliengitter bezeichnet, wird beispielsweise nach dem Formen in einer Beschneidestation konturgerecht abgeschnitten. Dabei kann je nach Produkt der Beschnitt in eine Längsbeschneideeinheit und in eine Querbeschneideeinheit aufgeteilt werden, wobei auch Anlagenkonfigurationen mit nur einer Querschneideeinheit existieren. Bei letzterer Ausführung wird das Formteil im Regelfall viermal gedreht und jeweils beschnitten.

Ein weiteres bekanntes Verfahren ist das Formen und Stanzen in einer Station. Hier befindet sich an einem Werkzeugteil des Werkzeugs, meist am Oberwerkzeug, zusätzlich ein Messer, welches meist als Bandstahlmesser ausgebildet, wobei das Bandstahlmesser zunächst während des Formvorgangs nur minimal in die Kunststofffolie eindringt. Nach dem Formprozess wird über einen zweiten Hub das Messer in der Vertikalrichtung, jedenfalls aber in der Wirkrichtung des Werkzeugs, weiter bewegt und dabei die Folie durchtrennt. Um das Produkt in der Anlage mit dem Restgitter weiter in Maschinendurchlaufrichtung transportieren zu können, wird das Messer gezielt in einigen Bereichen nicht durchlaufend gestaltet. Es entstehen dadurch kleine Kerben, in der Praxis auch aus dem englischen eingedeutscht als Nips bezeichnet, wobei die Kerben das Formteil noch ausreichend stark im Restgitter halten können. Das Formteil wird dann mit dem Restgitter weitertransportiert. Erst in einer späteren Station, meist in der direkt folgenden Station, wird das Formteil aus dem Restgitter herausgedrückt.

Die Kerben, somit also die Aussparungen in der durchlaufenden Messerlinie, werden auf die von den Kerben zu leistende Festhaltekraft ausgelegt. Diese wird aber nicht nur durch die Schwerkraft des Formteils festgelegt: Vielmehr kann auch eine Entformkraft entscheidend zur Auslegung berücksichtigt werden müssen. So ist es beispielsweise bei Kühlschranktüren üblich, eine umlaufende Gummidichtung einsetzen zu können. Mit Hilfe der umlaufenden Gummidichtung schließt die Kühlschranktür im Betrieb des Kühlschranks dicht. Um die Türdichtung leicht einsetzen zu können, wird seitens der Kühlschrankhersteller eine in der Tür umlaufende Nut gefordert. In diese kann die Türdichtung dann eingedrückt werden, wodurch sie dauerhaft hält. Die Türdichtung hat dazu einen meist rund im Querschnitt geformten Aufbau, so dass der rund geformte Teil beim Einlegen einfach zusammengedrückt und in die Nut hineingeschoben werden kann, und wobei der runde Teil in der Nut wieder auseinander federt und dadurch die Türdichtung in der Nut verrastet. Dies erfordert eine Form der Nut, die im Querschnitt zur Oberfläche hin eine schmale Öffnung und darunter verborgen eine Aufweitung aufweist. In der Praxis wird eine solche Form gern als Omega-Nut bezeichnet.

Um eine Nut zu formen, welche eine schmale Öffnung und eine Aufweitung darunter aufweist, somit also zwei Hinterschnitte aufweist, was nachstehend der Einfachheit halber als Omega-Form bezeichnet werden kann, ist es in den meisten Fällen erforderlich, am Negativteil des Werkzeugs zwei als Vorsprünge ausgebildete Hinterschnittformkanten vorzusehen, an welchen sich die Hinterschnitte und ihnen nachfolgend die Aufweitung der Omega-Form ausbilden.

Die Kerben im Bandstahlmesser werden auf die Kraft ausgelegt, die erforderlich ist, das geformte Formteil aus dem Hinterschnitt herauszuziehen. Anderenfalls würden die Kerben schon beim Versuch des Entformens zerreißen, und der Weitertransport des Formteils wäre gefährdet.

In gewisser Weise wird dadurch natürlich das Problem der präzisen Abtrennung des Formteils vom Restgitter auf die folgende Station verlagert, und das Problem wird nicht tatsächlich gelöst.

Der hier vorliegenden Erfindung liegt die Aufgabe zugrunde, dem Stand der Technik eine Alternative oder eine Verbesserung zur Verfügung zu stellen. Die Aufgabe wird mit einer Vorrichtung nach Anspruch 1 und mit einem Verfahren nach Anspruch 14 gelöst.

### Begrifflich sei hierzu folgendes erläutert:

Das "Werkzeug" ist im Regelfall ein zweiteiliges Werkzeug, also aufgeteilt in ein Oberwerkzeug und ein Unterwerkezug. Sowohl das Oberwerkzeug als auch das Unterwerkzeug kann jeweils aus mehreren Werkzeugstücken zusammengesetzt sein. So können beispielsweise relativ zueinander bewegliche Teile sowohl am Oberwerkzeug als auch beispielsweise am Unterwerkzeug vorgesehen sein.

Hier vorliegend wird vereinfachend von einem Oberwerkzeug und einem Unterwerkzeug gesprochen, weil die Wirkrichtung des Werkzeugs in der Praxis im Normalfall vertikal angeordnet wird. Es versteht sich jedoch, dass in anderer Wirkrichtung angeordnete Werkzeuge ebenfalls unter die hier vorliegende Erfindung fallen sollen.

Zudem sei bereits jetzt ausdrücklich darauf hingewiesen, dass unbestimmte Artikel und Zahlwörter wie "ein...", "zwei..." usw. im Regelfall als "mindestens"-Ausdrücke zu verstehen sein sollen, also als "mindestens ein...", "mindestens zwei..." usw., sofern sich nicht aus dem jeweiligen Kontext ergibt, dass etwa dort nur "genau ein...", "genau zwei..." usw. gemeint sein soll.

Die "Nut mit einem Hinterschnitt" kann an beliebiger Stelle des Werkzeugs zu erzeugen eingerichtet sein. Insbesondere sei an eine umlaufende Nut gedacht, also an eine Nut, welche am Rand des zu erzeugenden Formteils zumindest über einen erheblichen Teil von dessen Randbereich, bevorzugt aber über den gesamten Randbereich in sich geschlossen, umläuft. Die Erfindung kann schon bei einer Nut mit einem Hinterschnitt angewendet werden, bevorzugt aber sind zwei Hinterschnitte vorhanden, also eine Nut in Omega-Form.

In einer besonders bevorzugten Ausführungsform ist das herzustellende Formteil das Innenteil einer Kühlschranktür, und das Werkzeug ist dementsprechend zum Herstellen des Innenteils einer Kühlschranktür mittels eines Thermoformverfahrens eingerichtet.

Die "Öffnerichtung" liegt üblicherweise deckungsgleich mit der Maschinenwirkungsrichtung, nur entgegengesetzt. Die beiden Werkzeugteile fahren also im Regelfall linear aufeinander in Wirkungsrichtung zu, schließen und erzeugen das Formteil, und das Positivwerkzeug, meist das Oberwerkzeug, fährt anschließend in Ausziehrichtung, also gegen die Schließrichtung und somit die Werkzeugwirkrichtung, wieder zurück nach oben, und/oder das Unterwerkzeug fährt nach unten, und/oder beide bewegen sich absolut nach oben oder unten, jedenfalls aber relativ zueinander mit einer Öffnebewegung.

Die Erfindung ist unabhängig davon einsetzbar, ob das Oberwerkzeug und das Unterwerkzeug, also - in beliebiger Anordnung - das Positivwerkzeug und das Negativwerkzeug, beide vom Formteil wegfahren, oder ob das Formteil auf dem Positivwerkzeug oder in dem Negativwerkzeug zunächst noch verbleibt und es zeitversetzt daraus entformt wird.

Das "Abstützmittel" kann mannigfaltiger Art sein. Entscheidend ist, dass es auf das geformte Formteil eine Kraft ausübt, welche der Ausziehrichtung entgegenwirkt, sodass beim Entformen des Hinterschnitts auf die Nut ausgeübte Kräfte auf dem Weg zur Perforation, also zu den Kerben, abgefangen werden.

Für den Fall, dass sich das Negativwerkzeug um die Omega-Nut herum abzieht, soll das Abstützmittel demnach das Formteil mit einer gegen die Herausziehrichtung des Negativwerkzeugs gerichteten Haltekraft stützen.

Die vom Abstützmittel auf das Formteil aufgebrachte Kraft wirkt derjenigen Kraft entgegen, welche beim Entformen auf das Formteil wirkt. Die Resultierende aus der Entformkraft und der vom Abstützmittel entgegengerichtet aufgebrachte Kraft muss von den Kerben des Restgitters getragen werden. Die Resultierende ist aber deutlich geringer als die Entformkraft, so dass die Kerben nur eine deutlich geringere Kraft zum sicheren Festhalten des Formteils im Restgitter aufbringen müssen als nach dem Stand der Technik bekannt ist.

Im Idealfall ist das Werkzeug so gestaltet, dass während der Entformbewegung keine Relativbewegung zwischen dem Abstützmittel und dem Formteil im Bereich der Stanzlinie erfolgt.

Das Abstützmittel als solches kann geometrisch auf verschiedenste Arten geformt sein. Es kann sich beispielsweise um ein lineares Abstützmittel handeln, welches beispielsweise entlang einer Kontur der zu entformenden Nut verläuft, beispielsweise parallel versetzt zu dieser oder jedenfalls in ihrer Nähe verlaufend; bei einer besonders bevorzugten Ausführungsform ist das Abstützmittel an die Nut angreifend gestaltet. Im Idealfall verläuft das Abstützmittel kontinuierlich oder diskontinuierlich über die gesamte Länge der zu entformenden Nut.

Letztlich lässt sich das Abstützmittel nicht nur zum Reduzieren der Ausformkraft einsetzen, sondern sogar als örtlicher Fixierer für das zu entformende Formteil, so dass über ein geeignet gestaltetes Abstützmittel exakt vorgebbar ist, wohin und wie viel sich das Formteil beim Entformen verschiebt, längt oder verbiegt.

Um die Verformung des Formteils möglichst gut vorgeben zu können, wird vorgeschlagen, dass das Abstützmittel linienförmig Kraft auf das Werkstück auszuüben gestaltet ist. Dies kann am leichtesten dadurch erreicht werden, dass das Abstützmittel als Leiste oder Rahmen ausgebildet ist, wobei die Erstreckung des Abstützmittels in Werkzeugwirkrichtung auf die entsprechende Gegenkontur am gegenüberliegenden Werkzeugteil abgestimmt ist, idealerweise also konturidentisch verläuft. Dann kann das Abstützmittel bei idealer Gestaltung entlang der gesamten Nut eine Rückhaltekraft auf das Formteil ausüben beziehungsweise dieses örtlich klar definiert fixieren.

Der "Entformhalter" soll mit einfachen Worten dafür vorgesehen sein, eine Relativbewegung zwischen dem Formteil und dem Negativwerkzeug zu unterstützen. Dabei kann das Formteil am Positivwerkzeug gehalten werden, muss aber nicht dort gehalten werden. Der Entformhalter kann sowohl von der Seite des Positivwerkzeugs als auch von der Seite des Negativwerkzeugs aus wirken.

Das "Abstützmittel" ist am Negativwerkzeug angeordnet. Hauptaufgabe des Abstützmittels ist es, eine Kraft auf die zu entformende Nut auszuüben, und zwar vom Negativwerkzeug in Richtung zum Positivwerkzeug, und/oder eine Kraft, welche an der Nut vom Negativwerkzeug beim Entformen in das Formteil eingebracht wird, auf dem Weg zu den perforierten Linien, somit zu den Kerben, abzufangen.

Wenn das Abstützmittel linienförmig Kraft auf das Formteil auszuüben gestaltet ist, dann ist die Gefahr geringer, durch die ausgeübte Kraft das Formteil zu beschädigen. Vielmehr verteilt sich die gesamte ausgeübte Kraft entlang der Linie der Kraftübertragung, so dass die Spannung an jeder einzelnen diskreten Stelle geringer wird.

Das Abstützmittel kann einen umlaufenden Rahmen aufweisen. Insbesondere kann es sich hierbei um ein Gegenbauteil zum Abstützmittel handeln, wobei der Rahmen insbesondere am Positivwerkzeug angeordnet sein kann.

Es wurde bereits erläutert, dass das Werkzeug bevorzugt dazu eingerichtet ist, das Formteil mit Kerben mit einem Restfoliengitter verbunden zu erstellen. Dies erfolgt am besten mit einem BFS-Werkzeug, bei welchem in einem kombinierten Werkzeug geformt und zusätzlich mittels eines Bandstahls die Kunststofflage getrennt wird, bevorzugt gestanzt oder geschnitten, wobei die Kerben belassen werden, um das Formteil mit dem Restfoliengitter verbunden zu halten.

Die Erfindung sieht vor, dass am Negativwerkzeug ein Entformschieber angeordnet ist, wobei der Entformschieber dazu eingerichtet ist, beim Öffnen des Werkzeugs die Öffnebewegung des Positivwerkzeugs relativ zum Negativwerkzeug nachzuvollziehen, wobei der Entformschieber dazu eingerichtet ist, an das Formteil greifend zu verbleiben, während sich das Negativwerkzeug im Übrigen während des Öffnens in Öffnerichtung vom Formteil entfernt.

Mit kurzen Worten bedeutet dies, dass das Negativwerkzeug einerseits einen Teil aufweist, welcher beim Öffnen der beiden Werkzeugteile voneinander das Formteil entformt, während gleichzeitig ein Entformschieber vorgesehen ist, welcher nicht entformt, sondern diejenige Stelle, welche er am Formteil hält, gerade vom Entformen ausnimmt, indem der Entformschieber gegenüber dem Positivwerkzeug seine relative Position beibehält, jedenfalls mehr seine relative Position gegenüber dem Positivwerkzeug beibehält als das Negativwerkzeug.

Vorteilhaft ist es hierdurch möglich, zweistufig zu entformen, wodurch die insgesamt entstehenden Entformkräfte besser in ihrer Höhe kontrolliert werden können.

Es versteht sich, dass die Relativbewegung des Entformschiebers gegenüber dem Positivwerkzeug nicht zwingend exakt Null sein muss. Vielmehr führt eine verschlechterte Ausführungsform eine kleine Bewegung gegenüber dem Positivwerkzeug aus. Entscheidend ist allerdings, dass der Entformschieber gegenüber dem Negativwerkzeug eine Relativbewegung ausführt und dadurch das Formteil von einem vollständigen Entformen der Hinterschnitte abhält.

Der Entformschieber ist an die Nut zu greifen angeordnet, vor allem mit einer in den Hinterschnitt greifenden Hinterschnittformkante. Wenn der Entformschieber an die Nut zu greifen angeordnet ist, kann er bei geeigneter Gestaltung verhindern, dass die Nut entformt wird. Dies ist vor allem dann relevant, wenn er selbst den Hinterschnitt durch seine Hinterschnittformkante geformt hat und deshalb der ansonsten entformende Hinterschnitt eine große Kraft auf die Nut in Richtung zum Negativwerkzeug ausüben würde.

Um eine etwa entstehende Kraft auf die Nut davon abzuhalten, sich bis zur Trennlinie durch das Formteil fortzusetzen, also bis zu derjenigen Linie, an welcher die Kerben das geformte und teilherausgetrennte Formteil am Restfoliengitter halten, wird vorgeschlagen, dass der Entformschieber mit einer Stirn an einem der Nut benachbarten Bereich am Formteil zu greifen angeordnet ist, vor allem zwischen der Nut und der Trennlinie.

Der Entformschieber soll nicht nur dazu eingerichtet sein, sich zunächst, also beim ursprünglichen Öffnen des Werkzeugs, gegenüber dem Negativwerkzeug relativ zu verschieben, sondern anschließend auch dazu, sich relativ zum Positivwerkzeug in Öffnerichtung zum Negativwerkzeug hin zu öffnen und dabei zumindest einseitig den Hinterschnitt an der Nut zu entformen, nachdem sich bereits das Negativwerkzeug im Übrigen vom Werkstück entfernt hat.

Mit einer solchen Gestaltung lässt sich der zweite Entformschritt durchführen, wobei dabei die Kräfte auf die Kerben in Ihrer Höhe vermindert sind.

Die vorliegende Ausführungsform sieht vor, dass der Entformschieber einen Antrieb aufweist, welcher dazu eingerichtet ist, den Entformschieber während eines Öffne- und Entformvorgangs zunächst relativ zum Negativwerkzeug in Richtung zum Positivwerkzeug zu verfahren, bevorzugt in Öffnegeschwindigkeit, und später wieder zum Negativwerkzeug zurück zu verfahren.

Um die Kräfte beim Entformen der zumindest einen Seite der Nut aus dem Entformschieber zu minimieren, wird vorgeschlagen, dass ein schwenkbares oder anderweitig seitlich bewegliches Ausweichelement an einer Stirn des Entformschiebers angeordnet ist, wobei bevorzugt das Ausweichelement dazu eingerichtet ist, beim Entformen an der Nut zu liegen, und zwar mit einer Ausweichrichtung von der Nut weg, so dass eine seitliche Bewegung der Nut zu einer Ausweichbewegung des Ausweichelements führt.

Je kontrollierter das Ausweichelement ausweicht, sobald die Nut beim Entformen ihres Hinterschnitts Kraft auszuüben versucht, umso stärker gelingt es, die ansonsten auftretende Reaktionskraft zu mindern.

Der Entformschieber weist bevorzugt eine Entformschieberichtung auf, wobei die Entformschieberichtung parallel zur Öffnerichtung liegt, in den meisten Fällen wird dies die vertikale Raumachse sein, nämlich dann, wenn ein Oberwerkzeug und ein Unterwerkzeug verwendet werden.

Bevorzugt ist das Oberwerkzeug das Positivwerkzeug.

Der Entformschieber am Negativwerkzeug kann ein weiteres an das Formteil greifendes Abstützmittel aufweisen, welches mit dem Entformschieber in Öffnerichtung seine relative Position am Formteil beizubehalten eingerichtet ist, beispielsweise einen hydraulisch angetriebenen Zylinder bzw. eine Mehrzahl solcher Zylinder. In einer konstruktiv leichten Bauweise sind der Entformschieber und das weitere Abstützmittel mechanisch miteinander verbunden.

In einer Projektion auf eine Werkstoffebene, also auf diejenige Ebene, in welcher das Kunststoffwerkstück ursprünglich eingeführt worden ist, liegt der Entformschieber bevorzugt zwischen der Nut und einem Trennmittel, bevorzugt also dem Bandstahl bei einem BFS-Werkzeug. Dort kann der Entformschieber nicht nur die Funktion der Entformung der Nut mit kontrollierter Kraft ausüben, sondern zusätzlich eine etwa auf das Formteil in Entformrichtung wirkende Kraft abfangen, bevor diese die Kerben erreicht.

Alternativ oder kumulativ kann ein weiteres Abstützmittel vorgesehen sein, welches von der Nut aus jenseits des Trennmittels liegt, gewissermaßen also zwischen der designierten Trennkante im Kunststoff und dem Rand des Kunststoffs.

Es ist von besonderem Vorteil, wenn das Werkzeug ein BFS-Werkzeug ist, also ein kombiniertes Bandstahl-Form-Stanz-Werkzeug. Wenn das Formen und Stanzen mit einem idealerweise kombinierten Werkzeug in derselben Station erfolgt, kann der Beschnitt exakt zum Verlauf der Nut ausgerichtet werden, weil weder Folienschrumpf noch Transportgenauigkeit einen Einfluss haben. Das Formteil wird also in der kombinierten Bandstahl-Form-Stanz-Station nur einmal in einen Spannrahmen eingespannt und durch diesen örtlich festgelegt. Daraufhin erfolgt sogleich das Formen und im Idealfall mit dem kombinierten Werkzeug auch Einstanzen mittels des Bandstahls. Die Schnittlinie kann dadurch sehr präzise gelegt werden, wodurch auch die Kerben, welche die verbleibende Verbindung zum Restgitter bilden, ebenfalls sehr präzise ausgebildet werden können. Während des Entformens sorgt dann das Abstützmittel für die geringe Kraftausübung des Formteils auf die Kerben.

Aus dem Vorstehenden wird deutlich, dass bei der bevorzugten Ausführungsform angestrebt ist, dass das Werkzeug dazu eingerichtet ist, das Werkstück als Formteil verbunden mittels Kerben mit einem Restfoliengitter zu erstellen.

Insbesondere kann der Entformschieber zumindest einen Teil des Hinterschnitts werkzeugseitig bilden.

Dem vorstehenden Gedanken ist gemein, dass ein Teil des Werkzeugs, idealerweise des Negativwerkzeugs, der den Hinterschnitt werkzeugseitig darstellt, seitlich oder anderweitig so wegbewegt werden kann, dass das Werkzeug dem sich aufweitenden Teil der Nut weniger oder nicht mehr im Weg steht, während die im Formteil eingeformte Nut entformt wird. So kann beispielsweise ein Werkzeugteil, der für das Formen des engen Halses einer Omega-Nut verantwortlich ist, so weit seitlich wegbewegt werden, beispielsweise weggeschwenkt werden, dass sich der Werkzeugteil nicht mehr in der Entformrichtung des aufweitenden Teils der Omega-Nut befindet.

Die gegenwärtig bevorzugte Ausführungsform der Erfindung sieht vor, dass in einem Negativwerkzeug zum Thermoformen der Nut ein Entformschieber angeordnet ist, wobei der Entformschieber dazu eingerichtet ist, zum Entformen der Nut die Entformbewegung des Positivwerkzeugs mitzuvollführen.

Begrifflich sei hierzu erläutert, dass der "Entformschieber", welcher sich aus dem Negativwerkzeug zum Formteil erstreckt, ein "Abstützmittel" darstellt. Zum besseren Verständnis innerhalb der hier vorliegenden Patentanmeldung sei jedoch der Entformschieber als solcher bezeichnet.

Der Entformschieber kann als singulärer Schieber vorliegen, oder es können mehrere diskrete Schieber vorgesehen sein, wobei diese jeweils punktuell oder bevorzugt linienförmig am Formteil angreifen können.

Ein "Mitvollziehen" einer Bewegung liegt im Sinne der hier vorliegenden Patentanmeldung dann vor, wenn der Entformschieber entweder zeitgleich oder streckengleich oder zeit- und streckengleich mit dem Positivwerkzeug die Entformbewegung vollzieht, wobei es bei einer verschlechterten Ausführungsform der Erfindung auch reichen kann, wenn der Entformschieber zumindest eine Bewegungskomponente aufweist, welche sich auf die Entformrichtung projizieren lässt.

Ziel des Mitvollführens der Entformbewegung ist es, die entformenden Folgen der Relativbewegung zwischen dem Positivwerkzeug und dem Negativwerkzeug zu vermindern oder sogar ganz zu eliminieren, indem gewissermaßen ein Teil des Negativwerkzeugs dem Positivwerkzeug nachläuft und somit dessen Bewegung mitvollführt.

Wenn der Entformschieber mit einer Stirn an die Nut greift, kann die Verformung der Nut - bezogen auf die Relativbewegung zum Positivwerkzeug - besonders gut gemindert werden. Beim Entformen stützt dann der Entformschieber mit seiner Stirn gezielt die Nut.

Als eine "Stirn" wird ein solcher Bereich des Entformschiebers verstanden, welcher zumindest im Wesentlichen seiner Schiebebewegung vorauseilend angeordnet ist oder welcher zumindest dazu eingerichtet ist, das Formteil, vor allem die Nut, in Schieberichtung des Entformschiebers zu unterstützen, um die ansonsten zu befürchtende Relativbewegung zwischen der Nut und dem Positivwerkzeug durch eine Kraftausübung in Entformschieberichtung zu mindern.

Alternativ oder kumulativ zu einem Angreifen des Entformschiebers an die Nut wird vorgeschlagen, dass der Entformschieber mit einer Stirn an einen der Nut benachbarten Bereichen am Formteil greift. Es versteht sich, dass das Entformen eine Kraft auf die Verengung der Nut ausübt. Diese Kraft setzt sich sowohl zur Nut selbst als auch zum benachbarten Bereich am Formteil hin fort. Wenn die Kraft am der Nut benachbarten Teil am Formteil angreift, wird es in den meisten Fällen sogar noch besser möglich sein, die auf die Kerben resultierende Kraft beim Entformen zu reduzieren.

Ein schwenkbares oder anderweitig seitlich bewegliches Element an einer Stirn des Entformschiebers sorgt dafür, dass dieses aus der Verjüngung am Eintritt der Nut herausbewegt werden kann. Insbesondere dann, wenn das seitlich bewegliche Element dazu eingerichtet ist, beim Entformen das Formteil zu greifen und wenn es während des Formens dazu eingerichtet war, einen Wirkeingriff auf die Verjüngung am Eintritt der Nut auszuüben.

Es wurde bereits erläutert, dass der Entformschieber mit seiner Entformschieberichtung bevorzugt parallel zur Werkzeugwirkrichtung liegt, wobei insbesondere an eine Anordnung gedacht sei, bei welcher ein Oberwerkzeug und ein Unterwerkzeug vorhanden sind, so dass die Werkzeugwirkrichtung vertikal verläuft, wobei die Entformschieberichtung ebenfalls vertikal verläuft, bevorzugt von unten nach oben.

Wenn der Entformschieber demnach an einem Negativwerkzeug ein an das Formteil greifendes, bevorzugt an die Nut greifendes, Abstützmittel aufweist, welches mit dem Entformschieber in Entformrichtung seine relative Position am Formteil beizubehalten eingerichtet ist, kann jenes Abstützmittel die eigentliche Kraftausübung des Entformschiebers auf das Formteil übernehmen.

Der Entformschieber und das von der gegenüberliegenden Seite auf das Formteil wirkende Abstützmittel können in Entformrichtung auf das Formteil projiziert eine Überschneidung oder zumindest eine direkte Angrenzung ihrer Projektionen aufweisen. Auf diese Weise können der Entformschieber und das von der gegenüberliegenden Seite an das Formteil angreifende Abstützmittel das Formteil im Wesentlichen zwischen sich einklemmen, so dass eine möglichst geringe Tordierung des Formteils zu befürchten ist, während beide Elemente auf das Formteil Kräfte ausüben.

Bevorzugt liegt in der Projektion der Entformschieber zwischen dem Abstützmittel und einem Schneidmesser oder jedenfalls zumindest zum Teil in Richtung auf das Schneidmesser von der Projektion des Abstützmittels versetzt. Auf diese Weise kann eine sehr ausgewogene Kraftausübung auf das Formteil erreicht werden.

Nach einem zweiten Aspekt der vorliegenden Erfindung löst die gestellte Aufgabe eine Werkzeugstation einer Thermoformanlage, insbesondere zum Herstellen von Halbzeugen für Kühlschränke, wobei die Werkzeugstation mit einem Werkzeug wie vorstehend beschrieben eingerichtet ist.

Es versteht sich, dass sich ein Werkzeug oder eine Werkzeugstation wie vorstehend beschrieben unmittelbar auch vorteilhaft auf eine gesamte Thermoformanlage auswirken.

Es sei ausdrücklich darauf hingewiesen, dass weitere Schritte hinzukommen können. Optionale und vorteilhafte Merkmale sowohl für das Verfahren als auch für die Vorrichtungen sind - soweit nicht bereits in den Patentansprüchen enthalten - der vorstehenden und/oder der nachstehenden Beschreibung zu entnehmen.

Die Erfindung wird nachstehend unter Bezugnahme auf die Zeichnung näher erläutert. Dort zeigen
- Figur 1: schematisch in einem Querschnitt ein Detail aus einem kombinierten Bandstahl-Form-Stanz-Werkzeug mit einem oberen Positivwerkzeug mit einem oberen Klemmrahmen, mit oder ohne Druckglocke, mit Formhilfestempel und mit einem unteren Negativwerkzeug,
- Figur 2: das Detail aus Figur 1 mit einem um ein erstes Maß abgesenktes Negativwerkzeug und
- Figur 3: das Detail aus den Figuren 1 und 2 mit einem weiter abgesenkten Negativwerkzeug.

Das kombinierte Werkzeug 1 in den Figuren besteht im Wesentlichen aus dem oberen Positivwerkzeug 2 und dem unteren Negativwerkzeug 3.

Das Werkzeug 1 ist dazu eingerichtet, die Innenseite einer Kühlschranktür in einem Thermoformprozess herzustellen. In der Thermoformanlage (nicht im Ganzen dargestellt) befindet sich nach einer Abwickelstation für eine Folienbahn zunächst eine Heizstation, danach eine Formstation.

Das Werkzeug 1 ist in der Formstation angeordnet. Mittels des Positivwerkzeugs oder Klemmrahmens 2 mit Formhilfestempel und des Negativwerkzeugs 3 wird die gewünschte Form im Formteil 4 erzeugt. Insbesondere soll dabei nah eines Randes 5 des Formteils 4, im hiesigen Beispiel hergestellt durch einen Formhilfestempel 6, eine Nut 7 in das Formteil 4 geformt werden. Die Nut kann kurz als eine Nut mit einer Omega-Form bezeichnet werden, weil sie gegenüber einem ansonsten durchgehenden Verlauf 8, 9 des Formteils 4 zunächst eine Einschnürung 10 mit zwei Hinterschnitten und darunter eine Aufweitung 11 aufweist. Hergestellt wird eine solche Form durch zwei Hinterschnittkanten 12 (in der Figur nur links beziffert) am Negativwerkzeug 3.

Es sei darauf hingewiesen, dass das Positivwerkzeug 2 und das Negativwerkzeug 3 hinsichtlich des Formens des gesamten Formteils vom Fachmann eher genau umgekehrt bezeichnet würden, also das hier obere Werkzeug als Negativwerkzeug und das hier untere Werkzeug als Positivwerkzeug. Im Rahmen der hier vorliegenden Anmeldung sei die Bezeichnung nur mit Blick auf die zu formende Omega-Nut zu verstehen. Welches Werkzeugteil die positive und welches die negative Form für das Formteil im Ganzen darstellt, ist für die Erfindung belanglos.

Auch sei darauf hingewiesen, dass der Fachmann das hier als Positivwerkzeug bezeichnete Werkzeug ebenso als "Klemmrahmen 2", mit oder ohne Druckglocke, bezeichnen kann.

Im fertigen Formteil 4 kann ein Dichtgummi in die Nut 7 einschnappen, sodass die um die Kühlschranktür umlaufende Dichtung dort sicher gehalten wird.

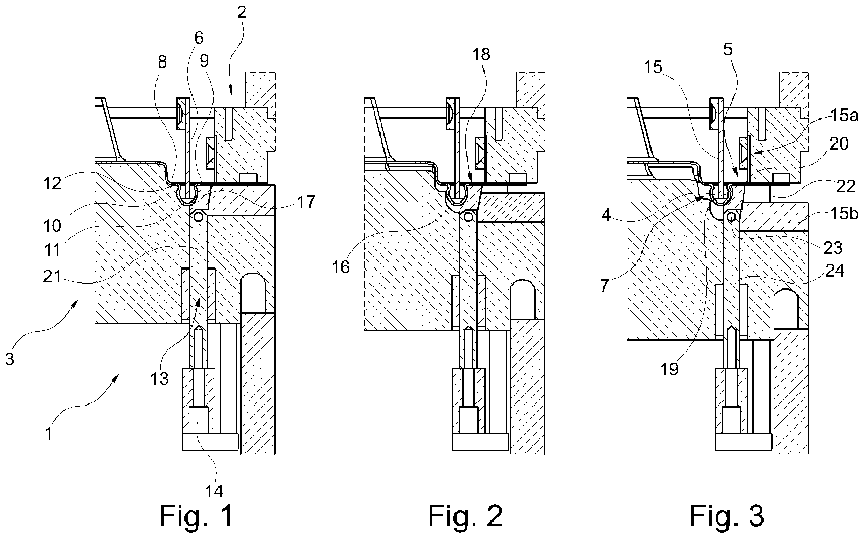

Zum Entformen (Figuren 2 und 3) wird im hiesigen Beispiel das Positivwerkzeug 2 bzw. der Klemmrahmen 2 ortsfest gehalten, während sich das Negativwerkzeug 3 nach unten absenkt. Beispielhaft kann Figur 2 ein um 4 mm abgesenktes Negativwerkzeug 2 darstellen, Figur 3 hingegen ein um 8 mm abgesenktes Negativwerkzeug 2.

Im selben Maß, in welchem sich das Positivwerkzeug 2 beim Ausformen vom Negativwerkzeug 3 durch beispielsweise das Absenken des Negativwerkzeugs entfernt, wird ein Entformschieber 13, welcher im Negativwerkzeug 3 angeordnet und gegenüber diesem relativ verschieblich und angetrieben ist, dem Positivwerkzeug 2 nach oben nachgeschoben. Hierfür ist beispielsweise eine Hydraulik- oder vor allem Pneumatikzylinderanordnung 14 vorgesehen und mit derselben Steuerung oder Regelung wirkverbunden, welche auch den relativen Hub des Positivwerkzeugs 2 gegenüber dem Negativwerkzeug 3 steuert oder regelt. Bevorzugt handelt es sich um eine elektronische Kopplung, wobei auch eine mechanische Kopplung denkbar ist.

Der Entformschieber 13, welcher im Negativwerkzeug angeordnet ist, wird bevorzugt bei geschlossenem Werkzeug aktiviert.

Gemeinsam mit dem Positivwerkzeug 2 steht beim Öffnen des Werkzeugs ein umlaufender Rahmen 15 fest, welcher als Abstützmittel seitens des Positivwerkzeugs 2 vorgesehen ist und bevorzugt um- und durchlaufend um ein Bandstahlstanzmesser 15a angeordnet ist. Bei geschlossenem Werkzeug (Fig. 1) ist die Kunststofffolie, welche zum Verarbeiten in das Werkzeug hinein gezogen wird, somit zwischen dem Rahmen 15 und einem Gegenrahmen 15b gespannt.

Zum Formen der Nut 7 greift bevorzugt vom Positivwerkzeug aus ein Formschieber, bevorzugt der Formhilfestempel 6, bevorzugt entlang der gesamten Nut 7 ausgebildet, in die Nut 7 hinein und sitzt dort mit einer abgerundeten Aufstandfläche 16 auf dem tiefsten Punkt des Formteils 4 in der Nut 7 auf. Bevorzugt werden außerdem vom Positivwerkzeug 2 aus ein Überdruck und/oder vom Negativwerkzeug 3 aus ein Unterdruck angelegt.

Der Aufstandsfläche 16 unmittelbar gegenüber liegt ein Schwenkteil 17 an einer Stirn 18 des Entformschiebers 13. Das Schwenkteil 17 hat als Abstützmittel zwei zum Positivwerkzeug 2 orientierte Flächen, nämlich eine erste Abstützfläche 19 und eine zweite Abstützfläche 20. Die erste Abstützfläche 19 sitzt genau der Aufstandsfläche 16 des Formschiebers 15 gegenüber, beabstandet nur durch die Dicke des Formteils 4 in der Nut 5. Die zweite Abstützfläche 20 hingegen sitzt benachbart zur Nut 7 am ansonsten durchgehenden Verlauf 9 des Formteils 4 an. Die zweite Abstützfläche 20 ist für die hier vorliegende Erfindung im Normalfall wichtiger.

In der hier gezeigten bevorzugten Ausführungsform verläuft die zweie Abstützfläche 20 über zumindest im Wesentlichen die gesamte Breite des Randes neben der Nut 7 und dem tatsächlichen Rand 5 des Formteils 4.

Der Entformschieber 13 kann in seinem massiven Teil 21 wie der Rahmen 15 durchlaufend oder diskret gestaltet sein. Wenn jedoch der Schwenkteil 17 durchlaufend gestaltet ist, oder wenn der Schwenkteil 17 zumindest teilweise linienförmig gestaltet ist, sodass er dem Verlauf der Nut 7 folgt, werden besonders gute mechanische Ergebnisse erreicht.

Gleichzeitig mit oder zeitlich vor oder nach dem Initiieren der Bewegung, mit welcher der Entformschieber 13 mittels der Abdrückeranordnung 14 so angehoben wird, dass er beim Entformen dem Positivwerkzeug 2 in dessen Relativbewegung gegenüber dem Negativwerkzeug 3 in der Öffnerichtung folgt. Infolgedessen erfolgt keine Relativbewegung zwischen Entformschieber 13, konkret dem Schwenkteil 17 des Entformschiebers 13, und dem am Positivwerkzeug 2 verbliebenen Formteil 4. Vielmehr kann die dem Schwenkteil gegenüberliegende zweite Seite der Nut 7 mit ihrem dortigen Hinterschnitt entformen. Dadurch, dass das Formteil 4 von Entformschieber 13 zwischen der sich entformenden zweiten Seite der Nut 7 und der vom Messer perforierten Kante gestützt wird, kommen die beim Entformen der zweiten (in der Figur linken) Seite in Richtung zum Negativwerkzeug 3 auf die Aufweitung 11 und somit auf das Formteil 4 wirkenden für die Perforierung gefährlichen Kräfte nicht oder nur stark vermindert an der Perforierung an. Die Stege sind somit nicht mechanisch zu versagen gefährdet.

Sobald die Entformung auf der zweiten Seite so weit fortgeschritten ist, dass das Negativwerkzeug mit seiner Hinterschnittformkante an der breitesten Stelle der Aufweitung 11 angekommen ist oder diese passiert hat, kann der Entformschieber 13 angesteuert werden, sodass es eine Relativbewegung gegenüber dem Positivwerkzeug 2 und dem an diesem verbleibenden Formteil 4 ausführt. Konkret fährt er im hier gezeigten Ausführungsbeispiel wieder in der Negativwerkzeug 3 ein. Dabei kommt es zur Entformung des Hinterschnitts auf der ersten Seite der Nut 7.

Bei einer möglichen Gestaltung ist zu diesem Zeitpunkt keine Abstützung mehr zwischen der Nut 7 und der Perforierung vorhanden, sodass an der Nut 7 etwa auf das Formteil 4 einwirkende zum Negativwerkzeug hin gerichtete Kräfte vom Formteil 4 übertragen werden und unmittelbar auf die Kerben an der Perforierung wirken können. Um nach Möglichkeit auch diese Kräfte zu vermindern oder zu vermeiden, kann die Kippbewegung des Schwenkteils 17 initiiert werden. Dies kann elektronisch oder mechanisch erfolgen, oder es kann passiv erfolgen, indem das Schwenkteil 17 einfach den Entformkräften folgt, welche von der Nut 7 auf den Entformschieber 13 ausgeübt werden, wenn sich die Aufweitung 11 der Nut 7 gegen die Hinterschnittformkante des Negativwerkzeugs 3 relativ verschiebt.

Im dargestellten Ausführungsbeispiel ist zusätzlich zum Entformschieber 13 und dem Rahmen 15 noch ein Abstützmittel in Form eines Abdrückers 22 vorgesehen, vor allem in Form einer Abdrückstange. Der Abdrücker 22 ist ebenfalls im Negativwerkzeug 3 angeordnet und folgt dem Positivwerkzeug 2 beim Entformen, sodass gleichzeitig und in identischem Maße mit dem relativen Hub des Positivwerkzeugs 2 und somit des Rahmens 15 auch der Entformschieber 13 und der Abdrücker 22 angehoben werden. Das Formteil 4 ist somit zwischen mehreren Bauteilen fixiert, welche zueinander keine Relativbewegung ausführen. Dies führt zu einer besonders schonenden Entformung, bei welcher auf die Kerben (nicht dargestellt) zwischen dem Formteil 4 und dem Restgitter der Folie möglichst geringe Kräfte ausgeübt werden.

Der Abdrücker 22, der auch durch ein beliebiges anders gestaltetes Bauteil ersetzt werden kann, welches das Formteil 4 am Positivwerkzeug fixiert, ist bevorzugt mit dem Entformschieber 13 in seiner Bewegung gekoppelt.

### Mit anderen Worten, und dabei weitere mögliche Merkmale offenbarend:

Durch die Verbindung des Entformschiebers 13 mit der Abdrückstange wird ein Ausfahren des Entformschiebers 13 verhindert, auch wenn dieser bereits bei geschlossenem Werkzeug aktiviert wird. Durch Absenken des Negativwerkzeugs 3, wobei der Klemmrahmen 2 in Position bleibt, fährt der Entformschieber 13 synchron mit der relativen Öffnegeschwindigkeit des Werkzeugs.

Nach Erreichen der Endlage des Entformschiebers 13 wird selbiger mit dem Negativwerkzeug nach unten mitgenommen. Dadurch wird der Omega-Hinterschnitt einseitig während der Linearbewegung zwangsentformt. Die zweite Seite wird nach Ausfahren und Wegkippen des wegschwenkbaren Schieberelements am Entformschieber 13 entformt. Dieses ist mit einem Gelenk 23 mit dem linear beweglichen Hauptteil 24 des Entformschiebers 13 verbunden.

Eine einfache Ausführungsform sieht vor, dass zum Entformen das Positivwerkzeug, hier das Oberwerkzeug, ortsfest bleibt, während sich das Negativwerkzeug nach unten senkt. Es sei allerdings ausdrücklich erwähnt, dass die Erfindung ebenso mit anderen absoluten Bewegungen ausgeführt werden kann; entscheidend sind allein die Relativbewegungen zwischen dem Positivwerkzeug, dem Formteil und dem Entformschieber und den Hinterschnittformkanten des Negativwerkzeugs.

## Patentansprüche

1. Werkzeug (2, 3) zum Formen eines Formteils (4) aus thermoplastischem Kunststoff, vor allem ausgehend von einer Kunststoffplatte oder -bahn, wobei das Werkzeug zum Thermoformen des Werkstücks einschließlich des Thermoformens einer Nut (7) mit einem Hinterschnitt und zum anschließenden Entformen des Werkstücks mit der hinterschnittenen Nut eingerichtet ist, **dadurch gekennzeichnet, dass** das Werkzeug ein Positivwerkzeug (2) und ein Negativwerkzeug (3) aufweist, welche sich zum Öffnen des Werkzeugs in einer Öffnerichtung relativ zueinander zu entfernen eingerichtet sind, wobei zum Entformen des Formteils (4) aus dem Negativwerkzeug (3) ein Entformhalter vorgesehen und dazu eingerichtet ist, das Formteil relativ zum Negativwerkzeug entfernt zu halten, wobei auf das Formteil in der Öffnerichtung zum Positivwerkzeug hin wirkend ein Abstützmittel, bevorzugt am Negativwerkzeug, vorgesehen ist, wobei am Negativwerkzeug ein Entformschieber (13) angeordnet ist, wobei der Entformschieber (13) dazu eingerichtet ist, beim Öffnen des Werkzeugs die Öffnebewegung des Positivwerkzeugs (2) relativ zum Negativwerkzeug (3) nachzuvollziehen, wobei der Entformschieber (13) dazu eingerichtet ist, an das Formteil (4) greifend zu verbleiben, während sich das Negativwerkzeug (3) im Übrigen während des Öffnens in Öffnerichtung vom Formteil entfernt,
wobei der Entformschieber (13) an die Nut (7) zu greifen angeordnet ist, und zwar mit einer in den Hinterschnitt greifenden Hinterschnittformkante
wobei der Entformschieber (13) dazu eingerichtet ist, sich relativ zum Positivwerkzeug (2) in Öffnerichtung zu öffnen und dabei zumindest einseitig den Hinterschnitt an der Nut zu entformen, nachdem sich bereits das Negativwerkzeug (3) im Übrigen vom Werkstück entfernt hat, wobei der Entformschieber (13) einen Antrieb (14) aufweist, welcher dazu eingerichtet ist, den Entformschieber (13) während eines Öffne- und Entformvorgangs zunächst relativ zum Negativwerkzeug (3) in Richtung zum Positivwerkzeug (2) zu verfahren, und zwar in Öffnegeschwindigkeit, und später wieder zum Negativwerkzeug (3) zurück zu verfahren.

2. Werkzeug nach einem Anspruch 1, ***dadurch gekennzeichnet, dass*** das Abstützmittel linienförmig Kraft auf das Formteil ausübend gestaltet ist.

3. Werkzeug nach Anspruch 2, ***dadurch gekennzeichnet, dass*** das Abstützmittel einen umlaufenden Rahmen aufweist.

4. Werkzeug nach einem der vorstehenden Ansprüche, ***dadurch gekennzeichnet, dass*** das Werkzeug dazu eingerichtet ist, das Formteil mit Kerben mit einem Restfoliengitter verbunden zu erstellen.

5. Werkzeug nach Anspruch 4, ***dadurch gekennzeichnet, dass*** das Werkzeug ein BFS-Werkzeug ist.

6. Werkzeug nach Anspruch 1, ***dadurch gekennzeichnet, dass*** der Entformschieber mit einer Stirn an einen der Nut benachbarten Bereich am Formteil zu greifen angeordnet ist, vor allem zwischen der Nut und einer Trennlinie.

7. Werkzeug nach Anspruch 6, ***dadurch gekennzeichnet, dass*** ein schwenkbares oder anderweitig seitlich bewegliches Ausweichelement an einer Stirn des Entformschieber angeordnet ist, wobei bevorzugt das Ausweichelement dazu eingerichtet ist, beim Entformen an der Nut zu liegen, und zwar mit einer Ausweichrichtung von der Nut weg, sodass eine seitliche Bewegung der Nut zu einer Ausweichbewegung des Ausweichelements führt.

8. Werkzeug nach einem der Ansprüche 6 bis 7, ***dadurch gekennzeichnet, dass*** der Entformschieber eine Entformschieberichtung aufweist, wobei die Entformschieberichtung parallel zur Öffnerichtung liegt.

9. Werkzeug nach einem der Ansprüche 6 bis 8, ***dadurch gekennzeichnet, dass*** der Entformschieber am Negativwerkzeug ein weiteres an das Formteil greifendes Abstützmittel aufweist, welches mit dem Entformschieber in Öffnerichtung seine relative Position am Formteil beizubehalten eingerichtet ist.

10. Werkzeug nach Anspruch 9, ***dadurch gekennzeichnet, dass*** in einer Projektion auf eine Werkstoffebene der Entformschieber zwischen der Nut und einem Trennmittel liegt.

11. Werkzeug nach Anspruch 9, ***dadurch gekennzeichnet, dass*** in einer Projektion auf eine Werkstoffebene das weitere Abstützmittel von der Nut aus jenseits eines Trennmittels liegt.

12. Werkzeugstation einer Thermoformanlage, nämlich zum Herstellen von Halbzeugen für Kühlschränke, mit einem Werkzeug nach einem der vorstehenden Ansprüche.

13. Thermoformanlage mit einer Werkzeugstation nach Anspruch 12.

14. Verfahren zum Betreiben einer Thermoformanlage zum Herstellen eines Thermoformprodukts, insbesondere eines Halbzeugs für einen Kühlschrank, unter Einsatz eines Abstützmittels beim Entformen zum Reduzieren von notwendiger Haltekraft an Haltekerben zwischen dem Werkstück und einem Restfoliengitter, mit den Schritten
a. Thermoformen eines Formteils (4) mit einer Nut (7) mit einem Hinterschnitt;
b. Öffnen des Werkzeugs mit Positivwerkzeug (2) und Negativwerkzeug (3),
wobei das Verfahren durch den folgenden weiteren schritten gekennzeichnet ist:
c. Während des Öffnens am Hinterschnitt Vorfahren eines Entformschiebers (13) aus dem Negativwerkzeug (3), um das Formteil am Positivwerkzeug (2) zu halten, sodass sich an einer ersten Seite der Nut (7) der dortige Hinterschnitt am Entformschieber (13) nicht entformt; wobei sich währenddessen eine zweite Seite der Nut (7) entformt, vor allem ein dortiger Hinterschnitt;
d. später Rückfahren des Entformschiebers (13) hin zum Negativwerkzeug (3), sodass sich an der ersten Seite der Nut (7) der Hinterschnitt entformt.

## Claims

1. Tool (2, 3) for forming a blank (4) from a thermoplast, starting mainly from a plastic plate or web, wherein the tool is adapted for thermoforming of the workpiece including the thermoforming of a groove (7) with an undercut and for subsequently unmoulding the workpiece with the undercut groove, **characterized in that** the tool has a male tool (2) and a female tool (3) which are adapted to move away from each other in an opening direction for opening of the tool, wherein for unmoulding the blank (4) from the female tool (3) an unmoulding holder is provided and adapted to keep the blank at a distance from the female tool, wherein a supporting means is provided, preferably on the female tool, acting on the blank in the opening direction towards the male tool,
wherein
an unmoulding slider (13) is arranged at the female tool, wherein the unmoulding slider (13) is adapted to reproduce, during opening of the tool, the opening movement of the male tool (2) in relation to the female tool (3), wherein the unmoulding slider (13) is adapted to remain engaging the blank (4) whereas the female tool (3) generally moves away from the blank during opening in the opening direction,
wherein the unmoulding slider (13) is adapted to engage the groove (7), namely by means of an undercut forming edge engaging in the undercut,
wherein the unmoulding slider (13) being adapted to open in relation to the male tool (2) in the opening direction and during this process to unmould the undercut on the groove at least on one side, after the female tool (3) generally has already moved away from the workpiece,
wherein the unmoulding slider (13) is having a drive (14) adapted to first translate the unmoulding slider (13), during an opening and unmoulding process, in relation to the female tool (3), in the direction towards the male tool (2), specifically with opening speed, and to later translate it back to the female tool (3).

2. Tool according to Claim 1, ***characterized in that*** the supporting means is designed to exert force on the blank in a linear direction.

3. Tool according to Claim 2, ***characterized in that*** the supporting means has a circumferential frame.

4. Tool according to one of the above Claims, ***characterized in that*** the tool is adapted to produce the blank with notches connected to a residual film grid.

5. Tool according to Claim 4, ***characterized in that*** the tool is a BFS tool.

6. Tool according to Claim 1, ***characterized in that*** the unmoulding slider is arranged to engage with a front a region of the blank adjacent to the groove, particularly between the groove and a separating line.

7. Tool according to Claim 6, ***characterized in that*** a pivotable or otherwise laterally movable yielding element is arranged at a front side of the unmoulding slider, wherein the yielding element is preferably adapted to rest on the groove during the unmoulding process, specifically with a yielding direction away from the groove so that a lateral movement of the groove leads to a yielding movement of the yielding element.

8. Tool according to one of Claims 6 through 7, ***characterized in that*** the unmoulding slider has an unmoulding sliding direction, the unmoulding sliding direction being parallel to the opening direction.

9. Tool according to one of Claims 6 through 8, ***characterized in that*** the unmoulding slider at the female tool has an additional supporting means engaging in the blank, which supporting means, with the unmoulding slider, is adapted to maintain its relative position on the blank in the opening direction.

10. Tool according to Claim 9, ***characterized in that*** in a projection onto a material level, the unmoulding slider is located between the groove and a separating means.

11. Tool according to Claim 9, ***characterized in that*** in a projection onto a material level, the additional supporting means is located on the other side of a separating means, seen from the groove.

12. Moulding station of a thermoforming line, namely for producing half-stock for refrigerators by means of a tool according to one of the above Claims.

13. Thermoforming line with a moulding station according to Claim 12.

14. Method of operating a thermoforming line for producing a thermoformed product, in particular half-stock for a refrigerator, using a supporting means during the unmoulding process for reducing the retention force necessary at retention notches between the workpiece and a residual film grid; having the following steps:
a. thermoforming of a blank (4) having a groove (7) with an undercut;
b. opening of the tool with a male tool (2) and a female tool (3), the method being **characterized by** the following additional steps:
c. during opening at the undercut, advancing of an unmoulding slider (13) from the female tool (3) in order to retain the blank at the male tool (2) so that at a first side of the groove (7), the undercut located there is not unmoulded at the unmoulding slider (13), wherein at the same time a second side of the groove (7) is unmoulded, in particular an undercut located there;
d. later reverse travel of the unmoulding slider (13) towards the female tool (3) so that on the first side of the groove (7), the undercut is unmoulded.

## Revendications

1. Outil (2, 3) pour mouler une pièce moulée (4) en plastique thermoplastique, à partir avant tout d'une plaque ou d'un lé de plastique, dans lequel l'outil est doté d'une contre-dépouille pour le thermoformage de la pièce y compris le thermoformage d'une rainure (7) et pour le démoulage consécutif de la pièce avec la rainure contre-dépouillée,
**caractérisé en ce que** l'outil présente un outil positif (2) et un outil négatif (3), lesquels sont conçus pour s'éloigner l'un de l'autre dans un sens d'ouverture pour ouvrir l'outil, dans lequel pour démouler la pièce moulée (4) hors de l'outil négatif (3), un support de démoulage est prévu et conçu pour maintenir la pièce moulée éloignée par rapport à l'outil négatif, dans lequel un moyen d'appui est prévu, de préférence sur l'outil négatif, agissant sur la pièce moulée dans le sens d'ouverture en direction de l'outil positif,
dans lequel un tiroir de démoulage (13) est disposé sur l'outil négatif, dans lequel le tiroir de démoulage (13) est conçu pour suivre le mouvement d'ouverture de l'outil positif (2) par rapport à l'outil négatif (3) lors de l'ouverture de l'outil, dans lequel le tiroir de démoulage (13) est conçu pour rester en prise sur la pièce moulée (4) pendant que l'outil négatif (3) s'éloigne en outre de la pièce moulée dans le sens d'ouverture pendant l'ouverture,
dans lequel le tiroir de démoulage (13) est disposé pour se mettre en prise sur la rainure (7) et ce avec une arête moulée de contre-dépouille se mettant en prise dans la contre-dépouille, dans lequel le tiroir de démoulage (13) est conçu pour s'ouvrir dans le sens d'ouverture par rapport à l'outil positif (2) et pour démouler ainsi la contre-dépouille sur la rainure, au moins d'un côté, après que l'outil négatif (3) s'est déjà en outre éloigné de la pièce,
dans lequel le tiroir de démoulage (13) présente un entraînement (14) qui est conçu pour déplacer le tiroir de démoulage (13) en direction de l'outil positif (2) d'abord par rapport à l'outil négatif (3) pendant une procédure d'ouverture et de démoulage, et ce à la vitesse d'ouverture, et le ramener après ensuite de nouveau vers l'outil négatif (3).

2. Outil selon la revendication 1, **caractérisé en ce que** le moyen d'appui est conçu pour exercer une force linéaire sur la pièce moulée.

3. Outil selon la revendication 2, **caractérisé en ce que** le moyen d'appui présente un cadre périphérique.

4. Outil selon l'une des revendications précédentes, **caractérisé en ce que** l'outil est conçu pour réaliser la pièce moulée reliée par des onglets à un maillage de film restant.

5. Outil selon la revendication 4, **caractérisé en ce que** l'outil est un outil BFS.

6. Outil selon la revendication 1, **caractérisé en ce que** le tiroir de démoulage est disposé par un avant sur une zone voisine de la rainure sur la pièce moulée, avant tout entre la rainure et une ligne de séparation.

7. Outil selon la revendication 6, **caractérisé en ce qu'**un élément de déviation pivotant ou mobile latéralement d'une autre façon est disposé sur un avant du tiroir de démoulage, dans lequel de préférence, l'élément de déviation est conçu pour reposer sur la rainure lors du démoulage et ce avec un sens de déviation l'éloignant de la rainure, de sorte qu'un mouvement latéral de la rainure conduit à un mouvement de déviation de l'élément de déviation.

8. Outil selon l'une des revendications 6 à 7, **caractérisé en ce que** le tiroir de démoulage présente un sens de tiroir de démoulage, dans lequel le sens de tiroir de démoulage est parallèle au sens d'ouverture.

9. Outil selon l'une des revendications 6 à 8, **caractérisé en ce que** le tiroir de démoulage présente sur l'outil négatif un autre moyen d'appui se mettant en prise sur la pièce moulée, lequel est conçu pour maintenir sa position relative sur la pièce moulée avec le tiroir de démoulage dans le sens d'ouverture.

10. Outil selon la revendication 9, **caractérisé en ce que** dans une projection sur un plan de matériau, le tiroir de démoulage repose entre la rainure et un moyen de séparation.

11. Outil selon la revendication 9, **caractérisé en ce que** dans une projection sur un plan de matériau, le moyen d'appui supplémentaire repose de chaque côté d'un moyen de séparation à partir de la rainure.

12. Poste d'outil d'une installation de thermoformage, à savoir pour fabriquer des produits semi-finis pour des réfrigérateurs, comprenant un outil selon l'une des revendications précédentes.

13. Installation de thermoformage comprenant un poste d'outil selon la revendication 12.

14. Procédé d'exploitation d'une installation de thermoformage pour fabriquer un produit thermoformé, en particulier un produit semi-fini pour un réfrigérateur, par l'emploi d'un moyen d'appui lors du démoulage pour réduire la force de retenue nécessaire sur les onglets de retenue entre la pièce et un maillage de film restant, comprenant les étapes
a. de thermoformage d'une pièce moulée (4) avec une rainure (7) comprenant une contre-dépouille ;
b. d'ouverture de l'outil avec outil positif (2) et outil négatif (3), dans lequel le procédé est **caractérisé par** les autres étapes suivantes :
c. pendant l'ouverture sur la contre-dépouille, avancée d'un tiroir de démoulage (13) venant de l'outil négatif (3) pour maintenir la pièce moulée sur l'outil positif (2) de sorte que la contre-dépouille se trouvant sur un premier côté de la rainure (7) ne se démoule pas sur le tiroir de démoulage ; dans lequel pendant ce temps, un second côté de la rainure (7) se démoule, avant tout une contre-dépouille qui s'y trouve.
d. retour ultérieur du tiroir de démoulage (13) vers l'outil négatif (3) de sorte que la contre-dépouille se démoule sur le premier côté de la rainure (7).
